(19) Europäisches Patentamt
European Patent Office
Office européen des brevets

(11) **EP 2 269 877 B1**

(12) **EUROPÄISCHE PATENTSCHRIFT**

(45) Veröffentlichungstag und Bekanntmachung des Hinweises auf die Patenterteilung:
**04.05.2016  Patentblatt 2016/18**

(51) Int Cl.:
***B60R 21/20*** *(2006.01)*

(21) Anmeldenummer: **10182008.2**

(22) Anmeldetag: **20.01.2005**

(54) **Seitenschutzeinrichtung**

Side protection device

Dispositif de protection latérale

(84) Benannte Vertragsstaaten:
**DE FR GB SE**

(30) Priorität: **23.01.2004  DE 102004004544**
**13.04.2004  DE 102004018665**

(43) Veröffentlichungstag der Anmeldung:
**05.01.2011  Patentblatt 2011/01**

(62) Dokumentnummer(n) der früheren Anmeldung(en) nach Art. 76 EPÜ:
**05714891.8 / 1 711 381**

(73) Patentinhaber: **Takata AG**
**63743 Aschaffenburg (DE)**

(72) Erfinder:
• **Feller, Jens**
**89171, Illerkirchberg (DE)**

• **Heuschmid, Rainer**
**89075, Ulm (DE)**
• **Sievers, Thomas**
**89081, Ulm (DE)**
• **Rasch, Georg**
**89346, Bibertal-Bühl (DE)**

(74) Vertreter: **Maikowski & Ninnemann**
**Postfach 15 09 20**
**10671 Berlin (DE)**

(56) Entgegenhaltungen:
**EP-A2- 1 044 855       DE-A1- 10 020 729**
**US-A- 5 718 450        US-A- 6 062 594**
**US-A1- 2004 012 179**

EP 2 269 877 B1

**Beschreibung**

Die Erfindung bezieht sich auf ein Fahrzeug mit einer Insassen-Seitenschutzeinrichtung mit den Merkmalen gemäß dem Oberbegriff des Anspruchs 1.

Ein solches Fahrzeug ist z.B. aus der US 6 062 594 A bekannt. Zudem ist eine Insassen-Seitenschutzeinrichtung beispielsweise aus der US-Patentschrift 6,695,340 B2 bekannt. Diese vorbekannte Insassen-Seitenschutzeinrichtung weist zum Schutz eines Fahrzeuginsassen einen Gasgenerator auf, der im Unfallfall einen Seitenairbag der Insassen-Seitenschutzeinrichtung aufbläst. Der Seitenairbag deckt im entfalteten Zustand einen Seitenwandabschnitt des Fahrzeugs ab, wodurch ein Aufschlagen des Fahrzeuginsassen, insbesondere des Kopfes des Fahrzeuginsassen, auf den Seitenwandabschnitt verhindert wird. Der Airbag weist neben seiner den Seitenwandabschnitt abdeckenden Hauptkammer bzw. Nutzkammer fingerähnliche Vorsprünge auf, die dazu dienen sollen, ein Wegbiegen der Hauptkammer von der Seitenwand zu verhindern.

Darüber hinaus ist aus der DE 100 20 729 A1 ein Seitengassack bekannt, der über zwei separate schlauchartige Airbaglanzen befüllt wird.

Die EP 1 044 855 A2 offenbart einen Gassack mit einem äußeren und einem inneren Abschnitt, wobei zwischen dem äußeren und dem inneren Abschnitt Überströmöffnungen vorhanden sind, die in Abhängigkeit von den Körpermaßen eines auf den Gassack aufprallenden Fahrzeuginsassen verschlossen werden.

Zudem beschreibt die US 2004/0012179 A1 einen Gassack mit einer Abströmöffnung, die mit einer verschiebbaren Abdeckung versehen ist.

Aus der US 5 718 450 A ist darüber hinaus ein Kopf-Thorax-Airbag mit einem Rückschlagventil zwischen der Kopf- und der Thoraxkammer bekannt.

Der Erfindung liegt die Aufgabe zugrunde, ein Fahrzeug mit einer Seitenschutzeinrichtung anzugeben, die ein besonders großes Maß an Sicherheit für den zu schützenden Fahrzeuginsassen bietet.

Diese Aufgabe wird ausgehend von einem Fahrzeug der eingangs angegebenen Art erfindungsgemäß durch die kennzeichnenden Merkmale des Anspruchs 1 gelöst. Vorteilhafte Ausgestaltungen der Erfindung sind in Unteransprüchen angegeben.

Danach ist vorgesehen, dass der Seitenairbag eine airbaginnere Überströmöffnung aufweist. Der Seitenairbag wird nach dem Auslösen der Insassen-Seitenschutzeinrichtung seitlich neben dem Fahrzeuginsassen derart aufgeblasen und positioniert, dass die Überströmöffnung körpergrößenabhängig - also abhängig von der Größe des Fahrzeuginsassen oder abhängig von der Größe vorgegebener Körperteile des Fahrzeuginsassen - verschlossen wird, bezüglich ihres Gasdurchflusses gedrosselt wird oder unverschlossen bleibt. Erfindungsgemäß weist die Insassenschutzeinrichtung einen Gasgenerator auf, der mit einem Ende in die Kopfkammer und mit einem anderen Ende in die Thoraxkammer hineinragt, so dass mit dem Gasgenerator sowohl die Kopfals auch die Thoraxkammer befüllbar ist.

Ein wesentlicher Vorteil der Insassen-Seitenschutzeinrichtung besteht darin, dass bei dieser eine fahrzeuginsassenindividuelle Einstellung des Aufblasverhaltens des Seitenairbags erfolgt. Dadurch wird eine optimale Positionierung des Seitenairbags und damit einhergehend eine bestmögliche Schutzwirkung des Seitenairbags sichergestellt.

Vorzugsweise wird der Seitenairbag derart zwischen dem Fahrzeuginsassen und einer intrudierenden Seitenwand des Fahrzeugs positioniert, dass der Seitenairbag vor der intrudierenden Seitenwand und/oder einem mit der intrudierenden Seitenwand in Verbindung stehenden Objekt des Fahrzeugs unmittelbar schützt. Alternativ oder zusätzlich kann der Seitenairbag auch vor anderen Gefahren schützen, beispielsweise vor anderen fahrzeugeigenen Objekten, vor fahrzeugfremden Objekten, insbesondere Teilen eines anderen am Unfall beteiligten Fahrzeugs, vor anderen Insassen des eigenen Fahrzeugs oder auch vor Insassen eines anderen am Unfall beteiligten Fahrzeugs.

Bevorzugt wird bei Fahrzeuginsassen, deren Körpergröße eine vorgegebene Mindestgröße überschreitet, die Überströmöffnung im Unfallfall ganz oder teilweise verschlossen bzw. gedrosselt; bei Fahrzeuginsassen, deren Körpergröße die vorgegebene Mindestgröße unterschreitet, bleibt die Überströmöffnung im Unfallfall vorzugsweise geöffnet.

Beispielsweise wird anhand der Schulterhöhe des Fahrzeuginsassen festgelegt, ob der Fahrzeuginsasse größer oder kleiner als die vorgegebene Mindestgröße ist. Vorzugsweise erfolgt ein Verschließen oder Drosseln der Überströmöffnung durch den Schulterbereich oder den Oberarmbereich des Fahrzeuginsassen. Bevorzugt ist die Überströmöffnung derart angeordnet, dass es zu einem Verschließen oder Drosseln der Öffnung durch ein Abklemmen oder Abdecken der Öffnung zwischen der Schulter oder dem Oberarmbereich des Fahrzeuginsassen und der intrudierenden Seitenwand kommt.

Beispielsweise weist der Seiten-Airbag eine Abströmöffnung, aus der Gas aus dem Seiten-Airbag nach außen dringen kann, aufweist, wobei der Seitenairbag nach dem Auslösen der Seitenschutzeinrichtung seitlich neben dem Fahrzeuginsassen derart aufgeblasen und positioniert wird, dass die Überströmöffnung und die Abströmöffnung körpergrößenabhängig verschlossen werden, bezüglich ihres Gasdurchflusses gedrosselt wird oder unverschlossen bleibt.

Um eine mehrstufige Einstellung des Gasdrucks des Seitenairbags in Abhängigkeit von der Insassengröße zu erreichen, kann eine Mehrzahl an Abströmöffnungen im Seitenairbag angeordnet sein.

Vorzugsweise steht mit der Abströmöffnung ein Abströmkanal in Verbindung, der das durch die Abströmöffnung austretende Gas vom Fahrzeuginsassen weglenkt. Verletzungen durch heiße Gase, die aus dem Airbag austreten, können durch den Abströmkanal verhindert werden. Der Abströmkanal kann beispielsweise durch ein Abdeckelement gebildet sein, das zwischen dem Fahrzeuginsassen und der Abströmöffnung angeordnet ist.

Vorzugsweise ist der Abströmkanal allen Abströmöffnungen des Seitenairbags zugeordnet, um ein gefahrloses Wegleiten des gesamten austretenden Gases zu erreichen. Alternativ kann allen Abströmöffnungen des Seitenairbags jeweils individuell ein Abströmkanal zugeordnet sein, der das aus der jeweiligen Abströmöffnung austretende Gas vom Fahrzeuginsassen weglenkt.

Um einen Schutz des Oberkörpers des zu schützenden Insassen zu erreichen, weist der Seiten-Airbag eine Thoraxkammer auf; im oberen Bereich der Thoraxkammer ist beispielsweise die erwähnte Abströmöffnung angeordnet.

Für einen besonders umfassenden Insassenschutz weist der Seiten-Airbag eine Kopfkammer und eine Thoraxkammer auf; zwischen der Kopfkammer und der Thoraxkammer ist die Überströmöffnung angeordnet. Bevorzugt ist der Seiten-Airbag derart ausgestaltet, dass im Falle eines Eindringens der Seitenwand in die Thoraxkammer des Seitenairbags Gas aus der Thoraxkammer in die Kopfkammer übergeleitet wird, solange die Überströmöffnung geöffnet ist.

Zusätzlich zu der Kopfkammer und der Thoraxkammer kann der Seiten-Airbag auch eine oder mehrere weitere Kammern aufweisen, um den Schutz des Insassen noch weiter zu verbessern.

Die Erfindung wird nachfolgend anhand von Ausführungsbeispielen erläutert, dabei zeigen:

Figuren 1 bis 3    ein erstes Beispiel einer nicht erfindungsgemäßen Insassenschutzeinrichtung mit einer Abströmöffnung ohne Abdeckelement,

Figuren 4 bis 7    ein zweites Beispiel einer nicht erfindungsgemäßen Insassenschutzeinrichtung mit einer Abströmöffnung mit einem Abdeckelement,

Figuren 8 bis 11    ein Ausführungsbeispiel einer Insassenschutzeinrichtung für ein erfindungsgemäßes Fahrzeug, wobei die Insassenschutzeinrichtung eine Überströmöffnung zwischen zwei Kammern eines Seitenairbags aufweist.

In den Figuren werden für vergleichbare oder identische Komponenten dieselben Bezugszeichen verwendet.

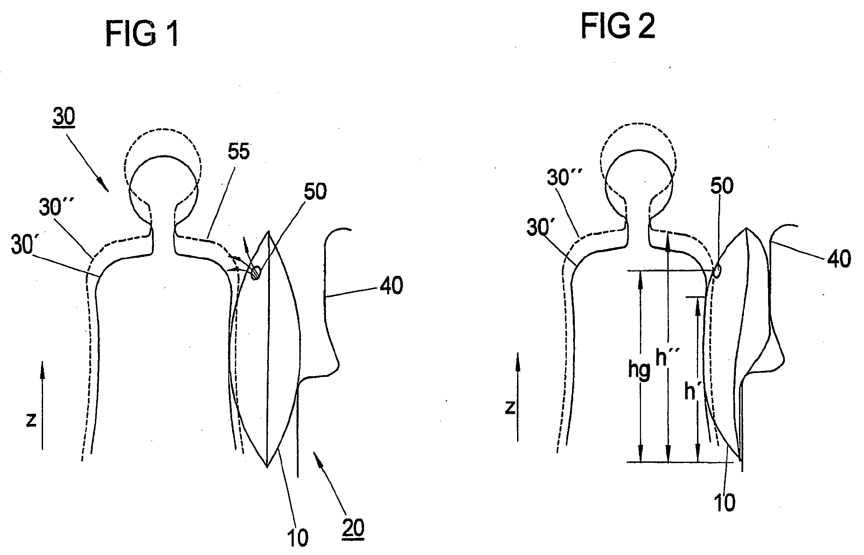

In der Figur 1 erkennt man einen unfallbedingt bereits aufgeblasenen Seitenairbag 10 einer im Übrigen nicht weiter im Detail dargestellten Insassenschutzeinrichtung 20. Die Insassenschutzeinrichtung 20 weist eine nicht dargestellte Steuereinrichtung auf, die im Falle eines Unfalls einen in der Figur 1 ebenfalls nicht dargestellten Gasgenerator zündet, mit dem der Seitenairbag 10 aufgeblasen wird.

Der Seitenairbag 10 ist beispielhaft zwischen einem Fahrzeuginsassen 30 und einer Fahrzeugwand 40 - z. B. einer Seitenwand bzw. Fahrzeugtür - angeordnet. Alternativ könnte der Seitenairbag 10 auch an einer anderen Stelle angeordnet werden.

In der Figur 1 sind für den Fahrzeuginsassen 30 zwei unterschiedliche Körpergrößen dargestellt: Ein "kleiner" Fahrzeuginsasse ist mit einer durchgezogenen Linie gezeichnet und trägt das Bezugszeichen 30'. Mit einer gestrichelten Linie ist ein "großer" Fahrzeuginsasse dargestellt, der mit dem Bezugszeichen 30" markiert ist.

Der "große" Fahrzeuginsasse 30" weist eine Körpergröße bzw. Insassengröße auf, die über einer vorgegebenen Mindestgröße liegt. Der mit der durchgezogenen Linie dargestellte "kleine" Fahrzeuginsasse 30' weist eine Körpergröße bzw. Insassengröße auf, die kleiner als die vorgegebene Mindestgröße ist.

In der Figur 1 ist erkennbar, dass der Seitenairbag 10 eine Abströmöffnung 50 aufweist, durch die das in den Seitenairbag 10 vom Gasgenerator hineingeblasene Gas den Seitenairbag 10 verlassen kann. In dem in der Figur 1 dargestellten Zustand ist der Fahrzeuginsasse 30 von der Fahrzeugwand 40 noch derart weit entfernt, dass die Abströmöffnung 50 vom Fahrzeuginsassen 30 noch nicht abgedeckt wird. Somit kann Gas aus dem Seitenairbag 10 durch die Abströmöffnung 50 austreten.

In der Figur 2 ist der weitere Unfallverlauf dargestellt, bei dem sich der Fahrzeuginsasse 30 und die Fahrzeugwand 40 näher aufeinander zu bewegt haben. Der Seitenairbag 10 ist nun zwischen dem Fahrzeuginsassen 30 und der Fahrzeugwand 40 eingeklemmt. Zu unterscheiden ist jetzt, ob es sich um den "kleinen" Fahrzeuginsassen 30' oder um den "großen" Fahrzeuginsassen 30" handelt: Wie in der Figur 2 erkennbar ist, deckt der "große" Fahrzeuginsasse 30" die Abströmöffnung 50 des Seitenairbags 10 mit seiner Schulter 55 vollständig ab, so dass kein Gas durch die Abströmöffnung 50 den Seitenairbag 10 mehr verlassen kann. Der Seitenairbag 10 behält somit seinen Innendruck weitestgehend bei, wodurch eine relativ große Wegdrück- bzw. Auffangkraft auf den "großen" Fahrzeuginsassen 30" ausgeübt wird.

Zu einem vollständigen Abdecken der Abströmöffnung 50 durch den "großen" Fahrzeuginsassen 30" kommt es, weil dessen Schulter 55 eine Schulterhöhe h" aufweist, die größer als eine durch die Anordnung der Abströmöffnung 50 vorgegebene Grenzhöhe hg ist. Es gilt also bei "großen" Fahrzeuginsassen 30":

$$h'' > hg.$$

Im Unterschied dazu deckt der "kleine" Fahrzeuginsasse 30' die Abströmöffnung 50 des Seitenairbags 10 nicht ab, da seine Schulter 55 die Abströmöffnung 50 nicht erreicht, so dass auch zu dem in der Figur 2 dargestellten Unfallzeitpunkt die Abströmöffnung 50 unabgedeckt bleibt. Das Gas kann also weiterhin aus dem Seitenairbag 10 durch die Abströmöffnung 50 austreten, so dass auf den Fahrzeuginsassen 30' eine im Vergleich zum großen Fahrzeuginsassen 30" nur reduzierte Wegdrück- bzw. Auffangkraft einwirkt.

Für die Schulterhöhe h' des "kleinen" Fahrzeuginsassen 30' gilt also:

$$h' < hg.$$

Zusammengefasst lässt sich damit feststellen, dass bei der Insassenschutzeinrichtung gemäß den Figuren 1 und 2 eine Wegdrück- bzw. Auffangkraft durch den Seitenairbag 10 ausgeübt wird, die abhängig von der Insassengröße ist. Konkret wird auf einen "großen" Fahrzeuginsassen 30" eine größere Wegdrück- bzw. Auffangkraft als auf einen "kleinen" Fahrzeuginsassen 30' ausgeübt.

Die Festlegung der eingangs genannten "vorgegebenen Mindestgröße" erfolgt dabei durch die Anordnung der Abströmöffnung 50. Je höher - in z-Richtung des Fahrzeugs gesehen - beispielsweise die Abströmöffnung angeordnet wird, desto größer ist auch die Mindestgröße des Fahrzeuginsassen - beispielsweise also die Schulterhöhe des Fahrzeuginsassen -, die überschritten werden muss, um ein Verschließen der Abströmöffnung 50 und damit einen erhöhten Seitenairbag-Innendruck zu erreichen.

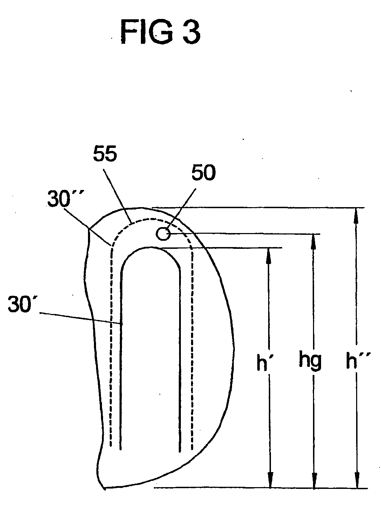

In der Figur 3 ist der Seitenairbag 10 gemäß den Figuren 1 und 2 in einer seitlichen Ansicht gezeigt. Man erkennt die Abströmöffnung 50, durch die das Gas aus dem Seitenairbag 10 abströmen kann. Darüber hinaus sind der Schulterbereich 55 des "großen" Fahrzeuginsassen 30" mit einer gestrichelten Linie und der Schulterbereich 55 des "kleinen" Fahrzeuginsassen 30' mit einer durchgezogenen Linie schematisch dargestellt. Man erkennt, dass die Abströmöffnung 50 von der Schulter 55 des "großen" Fahrzeuginsassen 30" abgedeckt wird, wohingegen sie im Falle des "kleinen" Fahrzeuginsassen 30' frei bleibt; dies liegt daran, dass die Schulterhöhe h' des Fahrzeuginsassen 30' nicht ausreicht, um die Abströmöffnung 50 zu verschließen.

In der Figur 3 ist darüber hinaus erkennbar, dass die Abströmöffnung 50 dem Fahrzeuginsassen 30' bzw. 30" unmittelbar gegenüberliegt, so dass das aus dem Seitenairbag 10 austretende Gas unmittelbar auf den Fahrzeuginsassen 30' bzw. 30" gelenkt wird. Im Falle eines "Heißgas"-Gasgenerators, der also heiße Gase zum Aufblasen des Seitenairbags 10 produziert, kann ein unmittelbares Ableiten der heißen Gase in Richtung Fahrzeuginsassen 30' bzw. 30" zu Verletzungen führen.

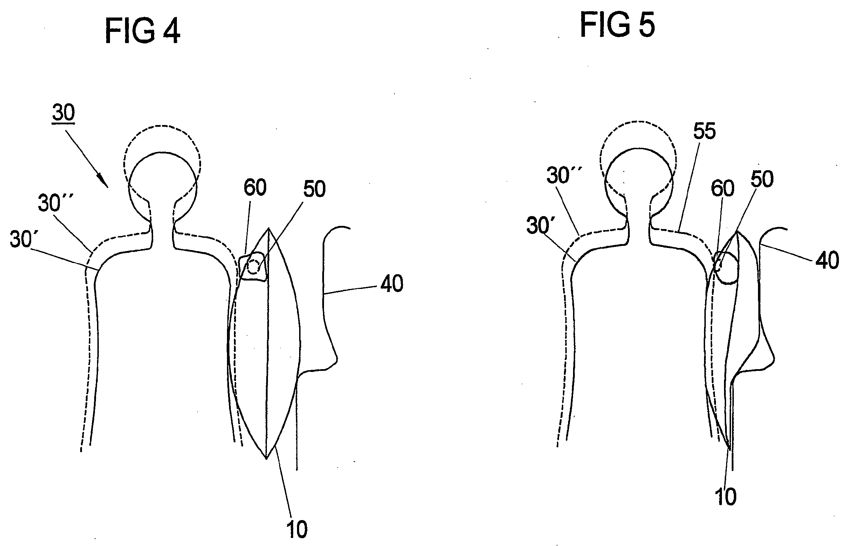

Um solche Verletzungen zu vermeiden, weist bei einem in den Figuren 4 bis 7 dargestellten zweiten Ausführungsbeispiel einer Insassenschutzeinrichtung der Seitenairbag 10 ein Abdeckelement 60 auf, das die Abströmöffnung 50 überdeckt und den durch die Abströmöffnung 50 austretenden Gasstrom derart ablenkt, dass dieser tangential zum Seitenairbag 10 abfließt und nicht unmittelbar auf den Fahrzeuginsassen trifft.

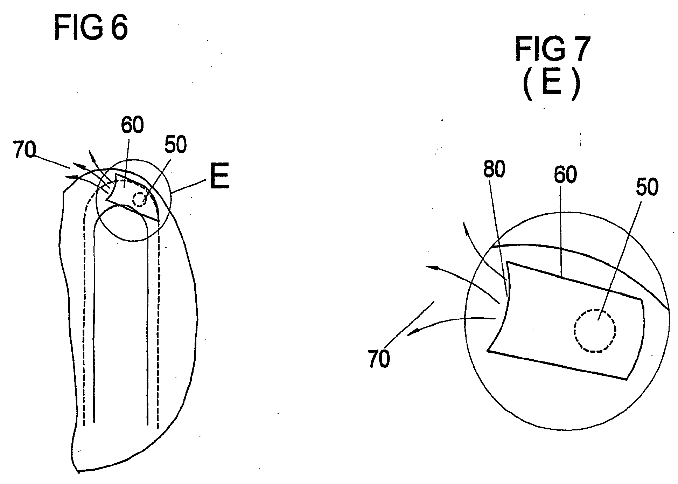

Dieses Ableiten des durch die Abströmöffnung 50 herausströmenden Gasstroms ist in den Figuren 6 und 7 mittels dreier Pfeile mit dem Bezugszeichen 70 dargestellt.

Die Figur 7 zeigt eine Einzelheit E der in der Figur 6 im Detail dargestellten Ausgestaltung des Seitenairbags 10 vergrößert. Man erkennt in der Figur 7 das Abdeckelement 60, das einen Abströmkanal 80 in tangentialer Richtung zur Oberfläche des Seitenairbags 10 bildet, nochmals im Detail.

In den Figuren 4 und 5 ist das Zusammenwirken des Seitenairbags 10 mit dem Fahrzeuginsassen 30 dargestellt. Man erkennt, dass ein großer Fahrzeuginsasse 30" mit seiner Schulter 55 das Abdeckelement 60 auf die Abströmöffnung 50 aufdrückt, wodurch die Abströmöffnung 50 verschlossen und ein weiterer Gasaustritt verhindert wird; es bildet sich somit eine "erhöhte" Wegdrück- bzw. Auffangkraft für einen großen Fahrzeuginsassen.

Im Falle eines kleinen Fahrzeuginsassen 30' bleibt das Abdeckelement 60 unbetätigt, so dass dauerhaft Gas aus der Abströmöffnung 50 austreten kann und eine nur verminderte Wegdrück- bzw. Auffangkraft erzeugt wird.

Im Zusammenhang mit den beiden Insassenschutzeinrichtungen gemäß den Figuren 1 bis 7 wurde das Abdecken der Abströmöffnung 50 beispielhaft anhand der Schulter 55 des Fahrzeuginsassen 30 erläutert, wobei "große" und "kleine" Fahrzeuginsassen anhand ihrer Schulterhöhe h' bzw. h" unterschieden wurden. Selbstverständlich können auch andere Körperteile bzw. Körperproportionen oder Körpermaße herangezogen werden, um zwischen "großen" und "kleinen" Fahrzeuginsassen zu unterscheiden; beispielsweise kann die Körperbreite bzw. Torsobreite als Maß herangezogen werden, wobei "breite" Fahrzeuginsassen als "groß" und "schmale" Fahrzeuginsassen als "klein" angesehen und behandelt werden.

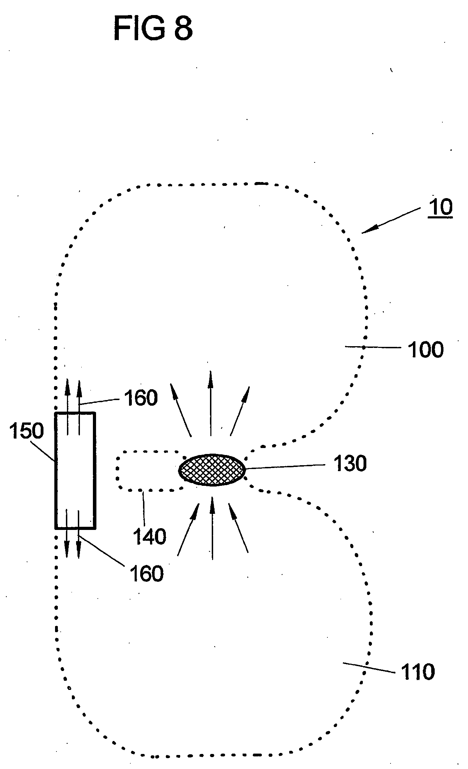

In den Figuren 8 bis 11 ist ein Seitenairbag einer Insassenschutzeinrichtung eines erfindungsgemäßen Fahrzeugs gezeigt. Man erkennt in der Figur 8 einen Seitenairbag 10 mit zwei Kammern 100 und 110. Bei der oberen Kammer 100 handelt es sich um eine Kopfkammer, die im Falle eines Unfalls den Kopf des Fahrzeuginsassen schützt. Die untere Kammer 110 ist eine Thoraxkammer, die eine Schutzwirkung für den Ober- und Unterkörper des Insassen entfaltet.

In der Figur 8 ist darüber hinaus eine Überströmöffnung 130 erkennbar, die einen Gasfluss zwischen den beiden Kammern 100 und 110 ermöglicht. Der Querschnitt bzw. Durchmesser der Überströmöffnung wird durch die Größe und die Positionierung einer Abnaht bestimmt, die mit dem Bezugszeichen 140 gekennzeichnet ist.

Im Falle eines Unfalls wird der Seitenairbag 10 mittels eines Gasgenerators 150 aufgeblasen; der Gasgenerator 150 befüllt dabei sowohl die Kopfkammer 100 als auch die Thoraxkammer 110; dies ist in der Figur 8 mit den Pfeilen 160 angedeutet.

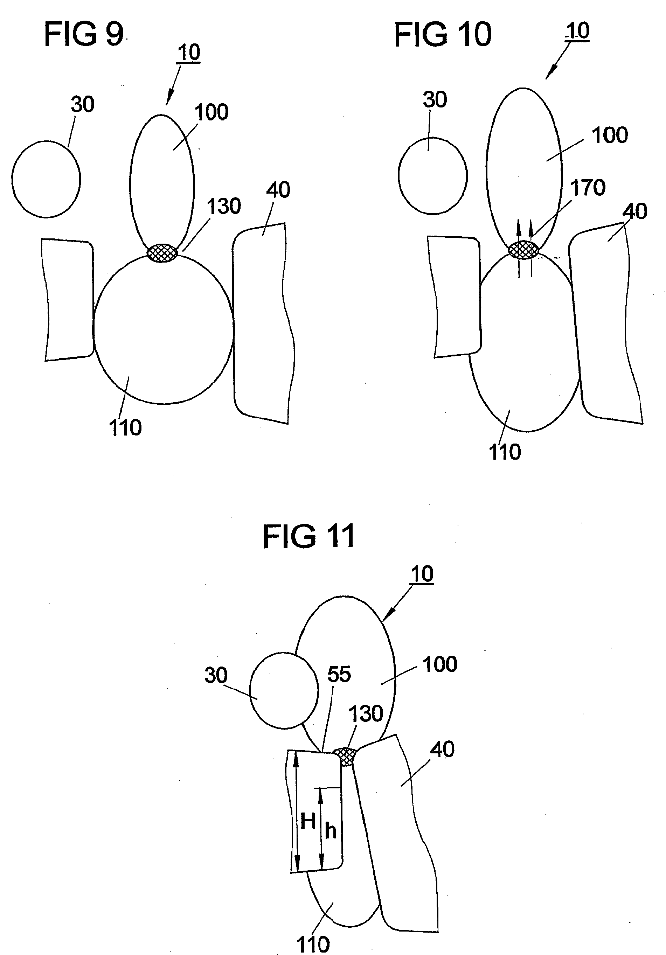

In den Figuren 9 bis 11 ist die Funktionsweise des Seitenairbags 10 im Unfallverlauf gezeigt. Man erkennt in der Figur 9 eine Seitenwand 40, die im Falle eines seitlichen Aufprallunfalls in Richtung auf den Insassen 30 gedrückt wird. Der Seitenairbag 10 ist zu dem in der Figur 9 gezeigten Zeitpunkt bereits aufgeblasen; man erkennt die aufgeblasene Kopfkammer 100 und die aufgeblasene Thoraxkammer 110.

Figur 10 zeigt die Unfallsituation zu einem späteren Zeitpunkt: Man erkennt, dass sich die Seitenwand 40 näher auf den Fahrzeuginsassen 30 zubewegt hat, wodurch die Thoraxkammer 110 zusammengedrückt wird. Aufgrund dieses Zusammendrückens wird in der Thoraxkammer der Gasdruck erhöht, so dass Gas aus der Thoraxkammer 110 in die Kopfkammer 100 fließt. Der Gasfluss ist durch einen Pfeil 170 angedeutet. Das Volumen der Kopfkammer 100 nimmt dadurch zu, so dass die Schutzwirkung für den Kopf des Insassen erhöht wird.

Im weiteren Unfallverlauf nähert sich die Seitenwand 40 dem Fahrzeuginsassen 30 noch weiter; dies zeigt die Figur 11. Durch die intrudierende Seitenwand 40 und die Schulter 55 des Fahrzeuginsassen 30 wird die Überströmöffnung 130 nun zusammengedrückt, so dass der Gasdurchfluss in Richtung Kopfkammer 100 gedrosselt wird. Unter Umständen kommt es zu einem vollständigen Verschließen der Überströmöffnung 130, wenn der Abstand zwischen der Schulter 55 und der Seitenwand 40 zu klein wird.

In der Figur 11 lässt sich erkennen, dass es zu einem Abklemmen der Überströmöffnung 130 nur dann kommen kann, wenn die Schulterhöhe H des Fahrzeuginsassen 30 groß genug ist. Würde die Schulter 55 unter der Überströmöffnung 130 liegen, so käme es zu keiner Drosselung bzw. zu keiner Unterbrechung des Gasdurchflusses durch die Überströmöffnung 130; dies ist in der Figur 11 durch eine gestrichelte Linie angedeutet, die die Schulterhöhe h eines kleinen Fahrzeuginsassen darstellt. Die Insassen-Seitenschutzeinrichtung gemäß den Figuren 8 bis 11 arbeitet also körpergrößenabhängig, indem die Überströmöffnung 130 größenabhängig gedrosselt oder verschlossen wird oder unverschlossen bleibt.

**Bezugszeichenliste**

| | |
|---|---|
| 10 | Seitenairbag |
| 20 | Insassenschutzeinrichtung |
| 30 | Fahrzeuginsasse |
| 30' | kleiner Fahrzeuginsasse |
| 30" | großer Fahrzeuginsasse |
| 40 | Fahrzeugwand |
| 50 | Abströmöffnung |
| 55 | Schulter |
| 60 | Abdeckelement |
| 70 | Gasstrom |
| 80 | Abströmkanal |
| 100 | Kopfkammer |
| 110 | Thoraxkammer |
| 130 | Überströmöffnung |
| 140 | Abnaht |
| 150 | Gasgenerator |
| 160 | Gasfluss |
| 170 | Gasfluss |
| H, h | Schulterhöhe |
| h', h' | Schulterhöhe |
| hg | vorgegebene Mindestgröße |

**Patentansprüche**

1. Fahrzeug mit einer Insassenschutzeinrichtung mit zumindest einem an einem Fahrzeugsitz angeordneten Seitenairbag (10), der im Falle einer Seitenkollision des Fahrzeugs einen Fahrzeuginsassen (30) schützt,

    - wobei der Seitenairbag (10) eine airbaginnere Überströmöffnung (130) aufweist,
    - und wobei der Seitenairbag (10) eine Kopfkammer (100), die den Kopf des Fahrzeuginsassen schützt, und eine Thoraxkammer (110), die den Ober- und Unterkörper des Fahrzeuginsassen (30) schützt, aufweist, wobei die Überströmöffnung (130) zwischen der Kopf- und der Thoraxkammer (100, 110) angeordnet ist, und
    - wobei der Seitenairbag (10) nach dem Auslösen der Seitenschutzeinrichtung seitlich neben dem Fahrzeuginsassen (30) derart aufgeblasen und positioniert wird, dass die Überströmöffnung (130) körpergrößenabhängig verschlossen wird, bezüglich ihres Gasdurchflusses gedrosselt wird oder unverschlossen bleibt,

    **dadurch gekennzeichnet, dass**
    die Insassenschutzeinrichtung einen Gasgenerator (160) aufweist, der mit einem Ende in die Kopfkammer (100) und mit einem anderen Ende in die Thoraxkammer (110) hineinragt, so dass mit dem Gasgenerator (150) sowohl die Kopf- als auch die Thoraxkammer (110) befüllbar ist.

2. Fahrzeug nach Anspruch 1, **dadurch gekennzeichnet, dass** der Seitenairbag (10) derart zwischen dem Fahrzeuginsassen (30) und einer intrudierenden Seitenwand (40) des Fahrzeugs positioniert wird, dass der Seitenairbag (10) vor fahrzeugeigenen Objekten, vor fahrzeugfremden Objekten, insbesondere vor Teilen eines anderen am Unfall beteiligten Fahrzeugs, oder vor Insassen eines anderen am Unfall beteiligten Fahrzeugs schützt.

3. Fahrzeug nach Anspruch 1 oder 2, **dadurch gekennzeichnet, dass** der Seitenairbag (10) derart zwischen dem Fahrzeuginsassen (30) und einer intrudierenden Seitenwand (40) des Fahrzeugs positioniert wird, dass der Seitenairbag (10) vor der intrudierenden Seitenwand (40) und/oder einem mit der intrudierenden Seitenwand (40) in Verbindung stehenden Objekt des Fahrzeugs unmittelbar schützt.

4. Fahrzeug nach einem der voranstehenden Ansprüche, **dadurch gekennzeichnet, dass** bei Fahrzeuginsassen (30), deren Körpergröße (h") eine vorgegebene Mindestgröße (hg) überschreitet, die Überströmöffnung (130) im Unfallfall gedrosselt oder verschlossen wird und dass bei Fahrzeuginsassen, deren Körpergröße (h') die vorgegebene Mindestgröße unterschreitet (hg), die Überströmöffnung (130) im Unfallfall geöffnet bleibt.

5. Fahrzeug nach einem der voranstehenden Ansprüche, **dadurch gekennzeichnet, dass** anhand der Schulterhöhe (h', h") des Fahrzeuginsassen (30) festgelegt ist, ob der Fahrzeuginsasse (30) größer oder kleiner als die vorgegebene Mindestgröße (hg) ist.

6. Fahrzeug nach Anspruch 5, **dadurch gekennzeichnet, dass** ein Verschließen oder Drosseln der Überströmöffnung (130) durch den Schulterbereich (55) oder den Oberarmbereich des Fahrzeuginsassen (30) erfolgt.

7. Fahrzeug nach Anspruch 6, **dadurch gekennzeichnet, dass** die Überströmöffnung (130) derart angeordnet ist, dass es zu einem Verschließen oder Drosseln der Öffnung durch ein Abklemmen der Öffnung zwischen der Schulter (55) oder dem Oberarmbereich des Fahrzeuginsassen und der intrudierenden Seitenwand (40) kommt.

8. Fahrzeug nach einem der vorangehenden Ansprüche, **dadurch gekennzeichnet, dass** der Seitenairbag (10) eine Abströmöffnung (50), aus der Gas aus dem Seitenairbag nach außen dringen kann, aufweist, wobei der Seitenairbag (10) nach dem Auslösen der Seitenschutzeinrichtung seitlich neben dem Fahrzeuginsassen (30) derart aufgeblasen und positioniert wird, dass die Überströmöffnung (130) und die Abströmöffnung (50) körpergrößenabhängig verschlossen werden, bezüglich ihres Gasdurchflusses gedrosselt wird oder unverschlossen bleibt.

9. Fahrzeug nach Anspruch 8, **dadurch gekennzeichnet, dass** eine Mehrzahl an Abströmöffnungen (50) im Seitenairbag (10) derart angeordnet ist, dass eine mehrstufige Abstufung der Wegdrück- bzw. Auffangkraft in Abhängigkeit von der Insassengröße erreicht wird.

10. Fahrzeug nach Anspruch 8 oder 9, **dadurch gekennzeichnet, dass** mit der zumindest einen Abströmöffnung (50) ein Abströmkanal (80) in Verbindung steht, der das durch die Abströmöffnung (50) austretende Gas vom Fahrzeuginsassen (30) weglenkt.

11. Fahrzeug nach einem der Ansprüche 8 bis 10, **dadurch gekennzeichnet, dass** die Abströmöffnung (50) im oberen Bereich der Thoraxkammer angeordnet ist.

12. Fahrzeug nach einem der vorhergehenden Ansprüche, **dadurch gekennzeichnet, dass** der Seitenairbag (10) derart ausgestaltet ist, dass im Falle eines Eindringens der Seitenwand (40) in die Thoraxkammer (110) des Seitenairbags (10) Gas aus der Thoraxkammer (110) in die Kopfkammer (100) übergeleitet wird, solange die Überströmöffnung (130) geöffnet ist.

13. Fahrzeug nach einem der vorhergehenden Ansprüche, **dadurch gekennzeichnet, dass** der Seitenairbag (10) zusätzlich zu der Kopfkammer (100) und der Thoraxkammer (110) zumindest eine weitere Kammer aufweist.

**Claims**

1. A vehicle comprising an occupant protection device with at least one side airbag (10) arranged on the vehicle seat which protects a vehicle occupant (30) in the event of a side collision of the vehicle,

   - wherein the side airbag (10) has an overflow opening (130) located inside the airbag,
   - and wherein the side airbag (10) has a head chamber (100) for protecting the head of the occupant (30) and a thorax chamber (110) for protecting the upper and the lower body of the occupant (30), wherein the overflow opening (130) is arranged between the head chamber (100) and the thorax chamber (110), and
   - wherein, after the side protection device has been triggered, the side airbag (10) is inflated and positioned laterally next to the vehicle occupant (30) in such a manner that the overflow opening (130) is closed as a function of body size, is throttled with regard to its throughflow of gas or remains unclosed,

**characterized in that**
the occupant protection device comprises a gas generator (150) which extens with one end into the head chamber (100) and with the other end into the thorax chamber (110), such that both the head chamber (100) and the thorax chamber (110) can be filled by means of the gas generator (150).

2. The vehicle as claimed in claim 1, **characterized in that** the side airbag (10) is positioned between the vehicle occupant (30) and an intruding side wall (40) of the vehicle in such a manner that the side airbag (10) provides protection from objects integral to the vehicle, from objects external to the vehicle, in particular from parts of another vehicle involved in the accident, or from occupants of another vehicle involved in the accident.

3. The vehicle as claimed in claim 1 or 2, **characterized in that** the side airbag (10) is positioned between the vehicle occupant (30) and an intruding side wall (40) of the vehicle in such a manner that the side airbag (10) immediately provides protection from the intruding side wall (40) and/or a vehicle object connected to the intruding side wall (40).

4. The vehicle as claimed in one of the preceding claims, **characterized in that**, in the case of vehicle occupants (30) whose body size (h") exceeds a predetermined minimum size (hg), the overflow opening (130) is throttled or closed in the event of an accident, and **in that**, in the case of vehicle occupants whose size (h') falls short of the predetermined minimum size (hg), the outflow opening (50) or the overflow opening (130) remains open in the event of an accident.

5. The vehicle as claimed in one of the preceding claims, **characterized in that** it is established with reference to the shoulder height (h', h") of the vehicle occupant whether the vehicle occupant (30) is larger or smaller than the predetermined minimum size (hg).

6. The vehicle as claimed in claim 5, **characterized in that** a closing or throttling of the overflow opening (130) takes place by means of the shoulder region (55) or the upper arm region of the vehicle occupant (30).

7. The vehicle as claimed in claim 6, **characterized in that** the overflow opening (130) is arranged in such a manner that a closing or throttling of the opening occurs by the opening being pinched off between the shoulder (55) or the upper arm region of the vehicle occupant and the intruding side wall (40).

8. The vehicle as claimed in one of the preceding claims, **characterized in that** the side airbag (10) has an outflow opening (50) from which the gas can penetrate to the outside from the side airbag (10), wherein after the side protection device has been triggered, the side airbag (10) is inflated and positioned laterally next to the vehicle occupant (30) in such a manner that the overflow opening (130) and the outflow opening (50) are closed as a function of body size, are throttled with regard to its throughflow of gas or remain unclosed.

9. The vehicle as claimed in claim 8, **characterized in that** a plurality of outflow openings (50) are arranged in the side airbag (10) in such a manner that a multi-stage graduation of the pushing-away or intercepting force is achieved as a function of the size of the occupant.

10. The vehicle as claimed in claim 8 or 9, **characterized in that** an outflow passage (80) is connected to the at least one outflow opening (50) and deflects the gas emerging through the outflow opening (50) away from the vehicle occupant (30).

11. The vehicle as claimed in one of the claims 8 to 10, **characterized in that** the outflow opening (50) is arranged in the upper region of the thorax chamber.

12. The vehicle as claimed in one of the preceding claims, **characterized in that** the side airbag (10) is designed in such a manner that, in the event of the side wall (40) penetrating the thorax chamber (110) of the side airbag (10), gas is passed over from the thorax chamber (110) into the head chamber (100) as long as the overflow opening (130) is open.

13. The vehicle as claimed in one of the preceding claims, **characterized in that**, in addition to the head chamber (100) and the thorax chamber (110), the side airbag (10) has at least one further chamber.

## Revendications

1. Véhicule avec un dispositif de protection des passagers avec au moins un airbag latéral (10) disposé sur un siège du véhicule, qui protège un passager du véhicule (30) dans le cas d'une collision latérale du véhicule,

- l'airbag latéral (10) comprenant une ouverture de trop-plein (130) à l'intérieur de l'airbag,
- et l'airbag latéral (10) comprenant une chambre de tête (100) qui protège la tête du passager du véhicule, et une chambre de thorax (110), qui protège la partie supérieure et la partie inférieure du corps du passager du véhicule (30), l'ouverture de trop-plein (130) étant disposée entre la chambre de tête et la chambre de thorax (100, 110), et

- l'airbag latéral (10) étant gonflé et positionné latéralement, après le déclenchement du dispositif de protection latérale, à côté du passager du véhicule (30), de façon à ce que l'ouverture de trop-plein (130) soit obturée, soit étranglée en ce qui concerne son débit de gaz ou reste non obturée, en fonction de la taille du corps,

**caractérisé en ce que**

le dispositif de protection des passagers comprend un générateur de gaz (150) qui dépasse, avec une extrémité, dans la chambre de tête (100) et avec une deuxième extrémité dans la chambre de thorax (110), de façon à ce que le générateur de gaz (150) permette de remplir aussi bien la chambre de tête que la chambre de thorax (110).

2. Véhicule selon la revendication 1, **caractérisé en ce que** l'airbag latéral (10) est positionné entre le passager du véhicule (30) et une paroi latérale pénétrante (40) du véhicule de façon à ce que l'airbag latéral (10) assure une protection contre des objets appartenant au véhicule, d'objets extérieurs au véhicule, plus particulièrement de parties d'un autre véhicule impliqué dans l'accident, ou contre les passagers d'un autre véhicule impliqué dans l'accident.

3. Véhicule selon la revendication 1 ou 2, **caractérisé en ce que** l'airbag latéral (10) est positionné entre le passager du véhicule (30) et une paroi latérale pénétrante (40) du véhicule de façon à ce que l'airbag latéral (10) assure une protection directe contre la paroi latérale pénétrante (40) et/ou contre un objet du véhicule relié avec la paroi latérale pénétrante (40).

4. Véhicule selon l'une des revendications précédentes, **caractérisé en ce que**, pour des passagers (30) dont la taille corporelle (h") dépasse une taille minimale (hg) prédéterminée, l'ouverture de trop-plein (130) est étranglée ou obturée dans le cas d'un accident et **en ce que**, pour les passagers dont la taille corporelle (h') est en dessous de la taille minimale (hg) prédéterminée, l'ouverture de trop-plein (130) reste ouverte dans le cas d'un accident.

5. Véhicule selon l'une des revendications précédentes, **caractérisé en ce que** la hauteur d'épaule (h', h") du passager du véhicule (30) permet de déterminer si le passager du véhicule (30) est plus grand ou plus petit que la taille minimale (hg) prédéterminée.

6. Véhicule selon la revendication 5, **caractérisé en ce qu'**une fermeture ou un étranglement de l'ouverture de trop-plein (130) a lieu grâce à zone de l'épaule (55) ou la zone du bras du passager du véhicule (30).

7. Véhicule selon la revendication 6, **caractérisé en ce que** l'ouverture de trop-plein (130) est disposée de façon à ce qu'une fermeture ou un étranglement de l'ouverture a lieu grâce à un pincement de l'ouverture entre l'épaule (55) ou la zone du bras du passager du véhicule et la paroi latérale pénétrante (40).

8. Véhicule selon l'une des revendications précédentes, **caractérisé en ce que** l'airbag latéral (10) comprend une ouverture d'évacuation (50) par laquelle le gaz peut sortir de l'airbag latéral vers l'extérieur, l'airbag latéral (10) étant gonflé et positionné, après le déclenchement du dispositif de protection latérale, latéralement à côté du passager du véhicule (30), de façon à ce que l'ouverture de trop-plein (130) et l'ouverture d'évacuation (50) soient obturées, soient étranglées en ce qui concerne leur débit de gaz ou restent non obturées, en fonction de la taille corporelle.

9. Véhicule selon la revendication 8, **caractérisé en ce qu'**une pluralité d'ouvertures d'évacuation (50) sont disposées dans l'airbag latéral (10) de façon à ce qu'un échelonnement sur plusieurs étapes de la force de compression ou d'absorption d'impact soit obtenue en fonction de la taille du passager.

10. Véhicule selon la revendication 8 ou 9, **caractérisé en ce que**, avec l'au moins une ouverture d'évacuation (50), est relié un canal d'évacuation (80) qui éloigne le gaz sortant par l'ouverture d'évacuation (50) du passager du véhicule (30).

11. Véhicule selon l'une des revendications 8 à 10, **caractérisé en ce que** l'ouverture d'évacuation (50) se trouve dans partie supérieure de la chambre de thorax.

12. Véhicule selon l'une des revendications précédentes, **caractérisé en ce que** l'airbag latéral (10) est conçu de façon à ce que, dans le cas d'une pénétration de la paroi latérale (40) dans la chambre de thorax (110) de l'airbag latéral (10) du gaz est transféré de la chambre de thorax (110) vers la chambre de tête (100), tant que l'ouverture de trop-plein (130) est ouverte.

13. Véhicule selon l'une des revendications précédentes, **caractérisé en ce que** l'airbag latéral (10) comprend, en plus de la chambre de tête (100) et de la chambre de thorax (110), au moins une chambre supplémentaire.

FIG 2

FIG 1

# FIG 3

# FIG 4

# FIG 5

FIG 7
(E)

50

60

80

70

FIG 6

E

50

60

70

# FIG 8

**FIG 9**

**FIG 10**

**FIG 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6062594 A
- US 6695340 B2
- DE 10020729 A1
- EP 1044855 A2
- US 20040012179 A1
- US 5718450 A